# EUROPÄISCHE PATENTSCHRIFT

(11) **EP 0 558 728 B1**
(45) Veröffentlichungstag und Bekanntmachung des Hinweises auf die Patenterteilung: **21.02.1996**
(21) Anmeldenummer: 92920002.0
(22) Anmeldetag: 21.09.1992
(51) Int. Cl.: B01D 53/34, C05F 17/02

(54) **VORRICHTUNG ZUR ZUFÜHRUNG, VERTEILUNG UND BEFEUCHTUNG VON GAS BEI EINER GASREINIGUNGS- ODER VERROTTUNGSANLAGE**
DEVICE FOR SUPPLYING, DISTRIBUTING AND MOISTENING GAS IN A GAS CLEANSING OR DECOMPOSITION INSTALLATION
DISPOSITIF POUR AMENER, DISTRIBUER ET HUMIDIFIER DU GAZ DANS UNE INSTALLATION D'EPURATION DE GAZ OU DE PUTREFACTION

(30) Priorität: 25.09.1991 DE 4131893
(43) Veröffentlichungstag der Anmeldung: 08.09.1993
(73) Patentinhaber: STUTZLE, Hugo, D-89081 Ulm (DE)
(72) Erfinder: STUTZLE, Hugo, D-89081 Ulm (DE)
(74) Vertreter: Fay, Hermann, Dipl.-Phys. Dr.
(86) Internationale Anmeldenummer: DE9200809
(87) Internationale Veröffentlichungsnummer: WO9305863

(56) Entgegenhaltungen:
- EP-A- 0 300 101
- EP-A- 0 442 157
- DE-A- 2 705 732
- DE-A- 3 634 377
- FR-A- 2 186 405

## Beschreibung

Die Erfindung betrifft eine Vorrichtung zur Zuführung, Verteilung und Befeuchtung von Gas bei einer Gasreinigungs- oder Verrottungsanlage, mit mindestens einer zur Aufnahme von Schüttmaterial eingerichteten, auf einer zu einer Entwässerungsöffnung hin geneigten Unterlage angeordneten Gasverteilerplatte, die über die Plattenfläche verteilt angeordnete Gasaustrittsöffnungen aufweist, ferner mit einem oder mehreren, auf der Unterseite der Gasverteilerplatte vorgesehenen, und mit den Gasaustrittsöffnungen in Verbindung stehenden Gasverteilerräumen, die an eine oder mehrere Zuführungsleitungen für das Gas angeschlossen sind, und mit von Wasser beaufschlagbaren Sprühdüsen zur Befeuchtung des Gases.

Bei einer aus DE-A-36 34 377 bekannten Vorrichtung dieser Art ist die Gasverteilerplatte aus einer Vielzahl von an- und nebeneinander angeordneten, quaderförmigen Formsteinen zusammengesetzt, die unmittelbar auf einem die Unterlage bildenden Bett verlegt sind. Die Gasverteilerräume befinden sich innerhalb der Gasverteilerplatte und bestehen aus Gasführungskanälen, welche die Gasaustrittsöffnungen reihenweise miteinander verbinden. Dabei ist in jedem Formstein ein zylindrischer Kanal ausgebildet und diese Kanäle ergeben im zusammengesetzten Zustand der Formsteine die Gasführungskanäle, die über einen gemeinsamen Sammelkanal an die Zuführungsleitung für das Gas angeschlossen sind. Zwischen dem Sammelkanal und der Zuführungsleitung ist eine Einlaßkammer vorgesehen, die eine Sprüheinrichtung zur Gasbefeuchtung mit einem Wasserreservoir, darüber angeordneten Sprühdüsen und einer Pumpe enthält. Die Zuführungsleitung mündet in die Einlaßkammer und der Sammelkanal ist mit einem Auslaß der Einlaßkammer verbunden. In der Einlaßkammer erfolgt die Befeuchtung des zugeführten Gases durch die Sprüheinrichtung. Das so mit Feuchtigkeit angereicherte Gas durchströmt den Sammelkanal und die Gasführungskanäle, ehe es durch die Gasaustrittsöffnungen in das auf den Gasverteilerplatten aufgehäufte Schüttmaterial gelangt. Überschüssiges Wasser kann auf der gemäß der Neigung der Unterlage eine Ablaufschräge besitzenden Gasverteilerplatte oder durch deren Gasführungskanäle hindurch in den Sammelkanal und daraus in die mit ihm verbundene Entwässerungsöffnung ablaufen. - Derartige Anlagen besitzen bezüglich der Gasverteilerplatte in der Regel verhältnismäßig große Flächenabmessungen, so daß sich die Sammel- und Gasverteilerkanäle über entsprechend lange Wege, zwischen 10 bis 100 m Länge, erstrecken. Auf diesen langen Wegen verliert das Gas wieder einen erheblichen Teil der ihm in der Einlaßkammer zugeführten Feuchtigkeit mit dem Ergebnis, daß das das Schüttmaterial durchströmende Gas schon zu trocken ist und die im Schüttmaterial gewünschten Prozesse mangels genügender Feuchtigkeit nicht mehr optimal ablaufen können.

Aus der DE-A-27 05 732 ist ein Naßabscheider zum Reinigen von Abluft bekannt, bei dem die Verunreinigungen durch versprühtes Waschwasser absorbiert werden. Dieser Naßabscheider besteht aus einer mit dem Waschwasser gefüllten Wanne und einem flüssigkeitsdicht auf die Wanne aufgesetzten Behältermantel. In dem vom Behältermantel umschlossenen, von der zu reinigenden Abluft von unten nach oben durchströmten Behälterinnenraum befinden sich in Abständen übereinander angeordnete Düsenstöcke mit jeweils einer Vielzahl von über die Querschnittsfläche des Behälters verteilten Düsen, die das ihnen aus der Wanne zugeführte Waschwasser versprühen, damit es vom Luftstrom aufgenommen werden kann. Jeweils zwischen den Düsenstöcken sind Füllkörperpakete angeordnet, die den Durchtritt des Luftstroms gestatten, wobei das im Luftstrom mitgeführte Waschwasser wieder abgegeben wird und von den Füllkörperpaketen abwärts in die Wanne zurückläuft.

Der Erfindung liegt die Aufgabe zugrunde, eine Vorrichtung der eingangs genannten Art so auszubilden, daß die dem Gas mitgeteilte Feuchtigkeit im Schüttmaterial auch voll zur Wirkung kommen kann.

Diese Aufgabe wird nach der Erfindung dadurch gelöst, daß die Sprühdüsen verteilt über die Plattenfläche unter der Gasverteilerplatte angeordnet sind und unmittelbar in die Gasverteilerräume münden, wobei die Gasverteilerplatte mit lichtem Abstand auf der Unterlage abgestützt ist und die Gasverteilerräume zwischen der Unterlage und der Gasverteilerplatte ausgebildet sind sowie die Unterlage wasserdicht ist und auf der Unterlage abfließendes Wasser von der Entwässerungsöffnung aufgenommen wird.

Der durch die Erfindung erreichte Vorteil besteht im wesentlichen darin, daß das Wasser gleichmäßig verteilt über die Fläche der Gasverteilerplatten direkt in die Gasverteilerräume eingesprüht wird und daher die Gasbefeuchtung erst unmittelbar unter der Gasverteilerplatte vor den Gasduchtrittsöffnungen erfolgt.

Das befeuchtete Gas gelangt somit auf kürzestem Wege, nämlich nur durch die Gasaustrittsöffnungen hindurch, in das Schüttmaterial und kann auf diesem Wege nicht nennenswert Feuchtigkeit verlieren, so daß das in das Gas eingetragene Wasser auch vollständig in das Schüttmaterial gelangen und dort wirksam werden kann. In den Gasverteilerräumen zwischen der Gasverteilerplatte und der Unterlage kann sich das Gas in jeder Richtung gleichmäßig verteilen und die Gasaustrittsöffnungen anströmen. Zugleich ist ausreichend Platz zur großflächigen Wasserzerstäubung und damit zu einer besonders wirksamen Gasbefeuchtung gegeben. Versprühtes, vom Gas aber nicht aufgenommenes Wasser, wie auch Sickerwasser aus dem Schüttmaterial und dieses selbst, soweit es durch die Gasaustrittsöffnungen hindurch in die Gasverteilerräume auf die Unterlage gefallen ist, kann auf der Unterlage in die Entwässerungsöffnung ablaufen, dann gesammelt, aufbereitet und das Wasser erneut zur Gasbefeuchtung eingesetzt werden. Das Wasser kann daher bei seinem Ablaufen auf der Unterlage eine ständige Reinigungswirkung ausüben und von oben durch die Gasaustrittsöffnungen hindurch in die Gasverteilerräume gelangtes Schüttmaterial von der Unterlage ausschwemmen.

Eine besonders vorteilhafte Ausführungsform ist dadurch gekennzeichnet, daß ein Wassersammelschacht mit einer Filtereinrichtung für Feinteile und eine der Filtereinrichtung nachgschaltete Pumpe vorgesehen sind, wobei die Entwässerungsöffnung mit dem Wassersammelschacht auf der Einlaufseite der Filtereinrichtung verbunden ist und die Sprühdüsen über die Pumpe mit dem gefilterten Wasser beaufschlagbar sind.

Die Sprühdüsen sind vorzugsweise an der Unterseite der Gasverteilerplatte mit senkrecht und/oder geneigt nach unten gerichteten Düsenöffnungen angordnet, wobei es sich empfiehlt, die Anordnungen insbesondere so zu treffen, daß sich die Sprühwasserkegel einander benachbarter Sprühdüsen in den Gasverteilerräumen gegenseitig durchdringen und daher der von den Sprühdüsen erzeugte Wassernebel die Gasverteilerräume flächendeckend füllt, das Gas also im Gegenstrom nur durch den Wassernebel hindurch in die Gasaustrittsöffnungen gelangen kann.

Im einzelnen sind zweckmäßigerweise an der Unterseite der Gasverteilerplatte verlaufende, die Sprühdüsen speisende Druckwasserleitungen vorgesehen. In besonders einfacher und daher bevorzugter Ausführungsform sind die Sprühdüsen von unmittelbar in der Wandung der Druckwasserleitungen ausgebildeten Düsenöffnungen gebildet. In jedem Fall empfiehlt es sich, daß die Druckwasserleitungen zu mehreren parallel nebeneinander verlaufen und am einen Leitungsende geschlossen, mit dem anderen Leitungsende an eine Wasserverteilungsleitung angeschlossen sind, die beispielsweise von der vorerwähnten Pumpe gespeist wird. Im übrigen können die Druckwasserleitungen als an der Unterseite der Gasverteilerplatte gehaltene Schläuche oder Rohre oder als unmittelbar in der Gasverteilerplatte verlaufende Kanäle ausgebildet sein. Am besten sind erfindungsgemäß die Gasaustrittsöffnungen in parallelen Reihen und dazwischen in jeweils einer Reihe die Sprühdüsen angeordnet.

Im folgenden wird die Erfindung an einem in der Zeichnung dargestellten Ausführungsbeispiel näher erläutert; es zeigen:
- Fig. 1: einen vertikalen Längsschnitt durch eine Vorrichtung zur Zuführung, Verteilung und Befeuchtung von Gas bei einer Kompostierungsanlage, in schematischer Darstellung,
- Fig. 2: die Anlage nach Fig. 1 in einer Draufsicht,
- Fig. 3: eine Gasverteilerplatte der Anlage nach den Fig.1 und 2 in einer Ansicht von unten, und
- Fig. 4: die Gasverteilerplatte nach Fig. 3 in einen Querschnitt längs der Schnittlinie IV-IV.

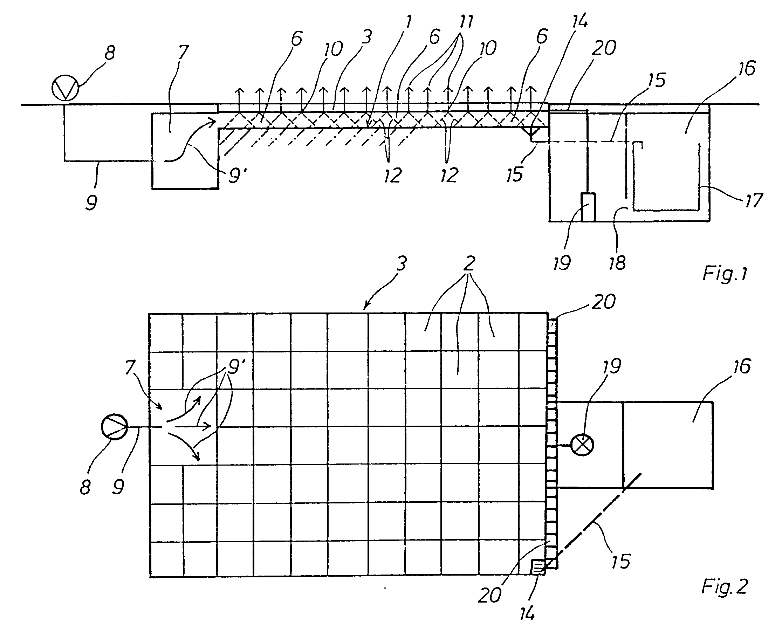

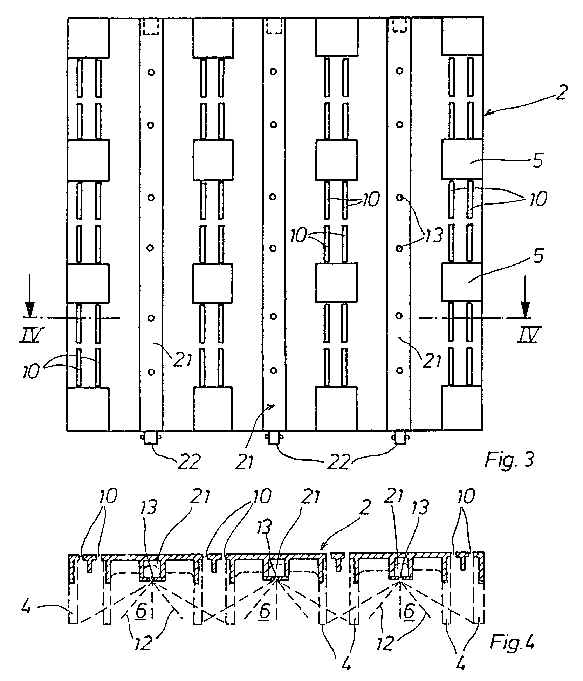

In Fig. 1 befindet sich über einer Unterlage, die von einem beispielsweise planierten, verdichteten und mit einem wasserdichten Belag versehenen Erdboden 1 gebildet sein kann, eine aus einer Vielzahl von in Fig. 2 einzeln angedeuteten Gasverteilerplatten 2 zusammengesetzte Basisplatte 3, die eine zum Befahren und zur Aufnahme von Schüttmaterial, wie Kompost oder dergl., eingerichtete Tragfähigkeit besitzt. Dazu sind die einzelnen Gasverteilerplatten 2 über eine in Fig. 4 lediglich gestrichelt angedeutete Stützkonstruktion 4 auf der Unterlage 1 abgestützt, so daß zwischen den Gasverteilerplatten 2 und der Unterlage 1 ein lichter Abstand verbleibt. Diese Stützkonstruktion kann weitgehend beliebig ausgebildet sein. In Fig. 4 ist davon ausgegangen, daß sie im wesentlichen aus mit Abstand voneinander angeordneten Stützfüßen besteht, die in passende Aufnahmen 5 an den Gasverteilerplatten 2 eingesetzt und im übrigen so gestaltet sind, daß sie die einzelnen Gasverteilerplatten 2 im Verbund der Basisplatte 3 gegenseitig fixieren. Im übrigen aber hat die Stützkonstruktion im wesentlichen dazu zu dienen, daß zwischen der Unterlage 1 und der Basisplatte 3 ein freier Gasverteilerraum 6 entsteht, in dem sich aus beispielsweise einem Luftverteilungsschacht 7 dem Gasverteilerraum 6 in Richtung des Pfeiles 9' zugeführtes Gas, insbesondere Luft, gleichmäßig über die gesamte Fläche der Gasverteilerplatten 2 ausbreiten und verteilen kann. Die Gaszuführung erfolgt durch ein Gasgebläse 8 über eine Zuführungsleitung 9. In den Gasverteilerplatten 2 befinden sich über die Plattenfläche verteilt angeordnete Gasaustrittsöffnungen 10, die nach unten hin mit dem Gasverteilerraum 6 in Verbindung stehen und durch die hindurch das Gas aus dem Gasverteilerraum 6 in das auf der Basisplatte 3 angehäufte Schüttmaterial in Richtung der Pfeile 11 einströmen kann. Unterhalb der Gasverteilerplatten 2 sind nur mit ihren Sprühkegeln 12 gestrichelt angedeutete Sprühdüsen vorgesehen, die ebenfalls über die Plattenfläche verteilt angeordnet sind und unmittelbar in den Gasverteilerraum 6 münden. Die wasserdichte Unterlage 1 besitzt ein leichtes Gefälle zu einer Entwässerungsöffnung 14 hin, so daß im Gasverteilerraum 6 von dem Gas nicht aus den Sprühkegeln 12 aufgenommenes Wasser, wie auch Sickerwasser aus dem Schüttmaterial, das durch die Gasaustrittsöffnungen 10 hindurch in den Gasverteilerraum 6 gelangt, auf der Unterlage 1 zu der Entwässerungsöffnung 14 hin ablaufen kann. Die Entwässerungsöffnung 14 steht über eine Leitung 15 mit der Einlaufseite eines Wassersammelschachtes 16 in Verbindung, in dem sich eine Filtereinrichtung 17 für Feinteile befindet, deren Auslaufseite 18 eine Pumpe 19 nachgeschaltet ist, die durch die Filtereinrichtung 17 gefiltertes und aufbereitetes Wasser in eine Wasserverteilungsleitung 20 fördert, aus welcher die im Gasverteilerraum 6 angeordneten Sprühdüsen mit Wasser versorgt werden. Im übrigen kann die Wasserverteilungsleitung 20 oder der Wassersammelschacht 16 auch an eine nicht dargestellte Wasserversorgungsleitung angeschlossen sein, um im Kreislauf fehlendes Wasser ersetzen zu können. Die Sprühdüsen sind an der Unterseite der Gasverteilerplatten 2 mit senkrecht und/oder geneigt nach unten gerichteten Düsenöffnungen 13 derart angeordnet, daß sich die Sprühwasserkegel 12 einander benachbarter Sprühdüsen im Gasverteilerraum 6 gegenseitig durchdringen, wie dies aus der in Fig. 1 und 4 gestrichelten Darstellung der Sprühkegel 12 ersichtlich ist. Im einzelnen sind an der Unterseite der Gasverteilerplatte 2 verlaufende, die Sprühdüsen aus der Wasserverteilungsleitung 20 speisende Druckwasserleitungen 21 vorgesehen. Die Sprühdüsen sind dabei von den unmittelbar in der Wandung der Druckwasserleitungen 21 ausgebildeten Düsenöffnungen 13 gebildet. Diese Druckwasserleitungen 21 verlaufen zu mehreren parallel nebeneinander und sind am einen, in Fig. 1 zum Luftverteilungsschacht 7 hin liegenden Leitungsende geschlossen, mit dem anderen Leitungsende an die Wasserverteilungsleitung 20 angeschlossen. Die Druckwasserleitungen 21 können als Schläuche oder Rohre ausgebildet sein, die sich über die gesamte Länge der aus den einzelnen Gasverteilerplatten 2 gebildeten Basisplatte 3 erstrecken und an der Unterseite der Gasverteilerplatten 2 gehalten, beispielsweise in dazu geeigneten Klammern festgeklemmt sind. Die Zeichnung zeigt jedoch eine Ausführungsform, bei der die Druckwasserleitungen 21 als unmittelbar in der Gasverteilerplatte 2 verlaufende Kanäle ausgebildet sind. Werden mehrere der Gasverteilerplatten 2 aneinandergesetzt, werden die Kanäle durch in Fig. 3 angedeutete Steckverbindungen 22 miteinander verbunden. Fig. 3 zeigt auch, daß die Gasaustrittsöffnungen 10 in jeweils parallelen Reihen und dazwischen in jeweils einer eigenen Reihe die Sprühdüsen mit ihren Düsenöffnungen 13 angeordnet sind.

## Patentansprüche

1. Vorrichtung zur Zuführung, Verteilung und Befeuchtung von Gas bei einer Gasreinigungs- oder Verrottungsanlage, mit mindestens einer zur Aufnahme von Schüttmaterial eingerichteten, auf einer zu einer Entwässerungsöffnung (14) hin geneigten Unterlage (1) angeordneten Gasverteilerplatte (2), die über die Plattenfläche verteilt angeordnete Gasaustrittsöffnungen (10) aufweist, ferner mit einem oder mehreren, auf der Unterseite der Gasverteilerplatte (2) vorgesehenen und mit den Gasaustrittsöffnungen (10) in Verbindung stehenden Gasverteilerräumen (6), die an eine oder mehrere Zuführungsleitungen (9) für das Gas angeschlossen sind, und mit von Wasser beaufschlagbaren Sprühdüsen zur Befeuchtung des Gases, dadurch gekennzeichnet, daß die Sprühdüsen verteilt über die Plattenfläche unter der Gasverteilerplatte (6) angeordnet sind und unmittelbar in die Gasverteilerräume (6) münden, wobei die Gasverteilerplatte (2) mit lichtem Abstand auf der Unterlage (1) abgestützt ist und die Gasverteilerräume (6) zwischen der Unterlage (1) und der Gasverteilerplatte (2) ausgebildet sind sowie die Unterlage (1) wasserdicht ist und auf der Unterlage abfließendes Wasser von der Entwässerungsöffnung (14) aufgenommen wird.

2. Vorrichtung nach Anspruch 1, dadurch gekennzeichnet, daß ein Wassersammelschacht (16) mit einer Filtereinrichtung (17) für Feinteile und eine der Filtereinrichtung nachgeschaltete Pumpe (19) vorgesehen sind, wobei die Entwässerungsöffnung (14) mit dem Wassersammelschacht (16) auf der Einlaufseite der Filtereinrichtung (17) verbunden ist und die Sprühdüsen über die Pumpe (19) mit dem gefilterten Wasser beaufschlagbar sind.

3. Vorrichtung nach Anspruch 1 oder 2, dadurch gekennzeichnet, daß die Sprühdüsen an der Unterseite der Gasverteilerplatte (2) mit senkrecht und/oder gneigt nach unten gerichteten Düsenöffnungen (13) angeordnet sind.

4. Vorrichtung nach Anspruch 3, dadurch gekennzeichnet, daß an der Unterseite der Gasverteilerplatte (2) verlaufende, die Sprühdüsen speisende Druckwasserleitungen (21) vorgesehen sind.

5. Vorrichtung nach Anspruch 4, dadurch gekennzeichnet, daß die Sprühdüsen von unmittelbar in der Wandung der Druckwasserleitungen (21) ausgebildeten Düsenöffnungen (13) gebildet sind.

6. Vorrichtung nach Anspuch 4 oder 5, dadurch gekennzeichnet, daß die Druckwasserleitungen (21) zu mehreren parallel nebeneinander verlaufen und am einen Leitungsende geschlossen, mit dem anderen Leitungsende an eine Wasserverteilungsleitung (20) angeschlossen sind.

7. Vorrichtung nach einem der Ansprüche 4 bis 6, dadurch gekennzeichnet, daß die Druckwasserleitungen (21) als Schläuche oder Rohre ausgebildet und diese an der Unterseite der Gasverteilerplatte (2) gehalten sind.

8. Vorrichtung nach einem der Ansprüche 4 bis 6, dadurch gekennzeichnet, daß die Druckwasserleitungen (21) als unmittelbar in der Gasverteilerplatte (2) verlaufende Kanäle ausgebildet sind.

9. Vorrichtung nach einem der Ansprüche 1 bis 8, dadurch gekennzeichnet, daß die Gasaustrittsöffnungen (10) in parallelen Reihen und dazwischen in jeweils einer Reihe die Sprühdüsen angeordnet sind.

10. Vorrichtung nach einem der Ansprüche 1 bis 9, dadurch gekennzeichnet, daß sich die Sprühwasserkegel (12) einander benachbarter Sprühdüsen in den Gasverteilerräumen (6) gegenseitig durchdringen.

## Claims

1. Apparatus for feeding, distributing and humidifying gas in a gas cleaning or decomposing installation, comprising at least one gas distributor plate (2) which is adapted to receive loose material and which is arranged on a support (1) that is inclined towards a drain opening (14), the gas distributor plate (2) having gas outlet openings (10) which are arranged distributed over the area of the plate, further comprising one or are gas distributor spaces (6) which are provided on the underside of the gas distributor plate (2) and which communicate with the gas outlet openings (10) and which are connected to one or more feed conduits (9) for the gas, and comprising spray nozzles which can be supplied with water for humidifying the gas, characterised in that the spray nozzles are arranged distributed over the area of the plate under the gas distributor plate (2) and open directly into the gas distributor spaces (6), wherein the gas distributor plate (2) is supported with a clear spacing on the support (1) and the gas distributor spaces (6) are provided between the support (1) and the gas distributor plate (2) and the support (1) is water-tight and water which flows away on the support is received by the drain opening (14).

2. Apparatus according to claim 1 characterised in that there are provided a water collecting well (16) with a filter device (17) for fine pieces and a pump (19) which is connected downstream of the filter device, wherein the drain opening (14) is connected to the water collecting well (16) on the intake side of the filter device (17) and the spray nozzles can be supplied with the filtered water by way of the pump (19).

3. Apparatus according to claim 1 or claim 2 characterised in that the spray nozzles are arranged at the underside of the gas distributor plate (2) with perpendicularly and/or inclinedly downwardly directed nozzle openings (13).

4. Apparatus according to claim 3 characterised in that there are provided pressurised water conduits (21) which extend at the underside of the gas distributor plate (2) and which feed the spray nozzles.

5. Apparatus according to claim 4 characterised in that the spray nozzles are formed by nozzle openings (13) provided directly in the wall of the pressurised water conduits (21).

6. Apparatus according to claim 4 or claim 5 characterised in that the pressurised water conduits (21) extend in pluralities in parallel juxtaposed relationship and are closed at one conduit end and are connected by the other conduit end to a water distribution conduit (20).

7. Apparatus according to one of claims 4 to 6 characterised in that the pressurised water conduits (21) are in the form of hoses or pipes and they are held to the underside of the gas distributor plate (2).

8. Apparatus according to one of claims 4 to 6 characterised in that the pressurised water conduits (21) are in the form of passages which extend directly in the gas distributor plate (2).

9. Apparatus according to one of claims 1 to 8 characterised in that the gas outlet openings (10) are arranged in parallel rows and the spray nozzles are respectively arranged therebetween in a row.

10. Apparatus according to one of claims 1 to 9 characterised in that the spray water cones (12) of mutually adjacent spray nozzles penetrate through each other in the gas distributor spaces (6).

## Revendications

1. Procédé pour envoyer, répartir et humidifier un gaz dans une installation d'épuration des gaz ou de putréfaction, comportant au moins une plaque (2) de répartition du gaz, qui est agencée de manière à recevoir un matériau en vrac et est disposée sur un support (1) incliné en direction d'une ouverture de drainage (14), et qui comporte des ouvertures (10) de sortie du gaz, qui sont disposées en étant réparties sur la surface de la plaque, et en outre un ou plusieurs espaces (6) de répartition du gaz, qui sont prévus sur la face inférieure de la plaque (2) de répartition du gaz et sont reliés aux ouvertures (10) de sortie du gaz et qui sont raccordés à une ou plusieurs canalisations d'amenée (9) pour le gaz, et des buses de pulvérisation pouvant être chargées par de l'eau et servant à humidifier le gaz, caractérisé en ce que les buses de pulvérisation sont disposées en étant réparties sur la surface de la plaque au-dessous de la plaque (6) de répartition du gaz et débouchent directement dans les espaces (6) de répartition du gaz, la plaque (2) de répartition du gaz étant supportée par le support (1) en en étant séparée par une faible distance et les espaces (6) de répartition du gaz étant formées entre le support (1) et la plaque (2) de répartition du gaz tandis que le support inférieur (1) est étanche à l'eau et que de l'eau s'écoulant sur le support est receptionnée par l'ouverture de drainage (14).

2. Dispositif selon la revendication 1, caractérisé en ce qu'il est prévu un puits (16) de collecte de l'eau comportant un dispositif de filtration (17) pour de fines particules et une pompe (19) branchée en aval du dispositif de filtration, l'ouverture de drainage (14) étant reliée au puits (16) de collecte de l'eau, sur le côté entrée du dispositif de filtration (17), et les buses de pulvérisation pouvant être chargées, au moyen de la pompe (19), par de l'eau filtrée.

3. Dispositif selon la revendication 1 ou 2, caractérisé en ce que les buses de pulvérisation sont disposées sur la face inférieure de la plaque (2) de répartition du gaz, les ouvertures (13) des buses étant dirigées verticalement et/ou en étant inclinées vers le bas.

4. Dispositif selon la revendication 3, caractérisé en ce qu'il est prévu des canalisations d'eau sous pression (21) qui s'étendent entre la face inférieure de la plaque (2) de répartition du gaz et alimentent les buses de pulvérisation.

5. Dispositif selon la revendication 4, caractérisé en ce que les buses de pulvérisation sont formées par des ouvertures de buses (13) aménagées directement dans la paroi des canalisations d'eau sous pression (21).

6. Dispositif selon les revendications 4 ou 5, caractérisé en ce que les canalisations d'eau sous pression (21) s'étendent à plusieurs parallèlement entre elles et sont fermées au niveau d'une extrémité et sont raccordées, par leur autre extrémité, à une canalisation de distribution d'eau (20).

7. Dispositif selon l'une des revendications 4 à 6, caractérisé en ce que les canalisations d'eau sous pression (21) sont agencées sous la forme de tuyaux ou de tubes et que ces tuyaux ou tubes sont maintenus contre la face inférieure de la plaque (2) de répartition du gaz.

8. Dispositif selon l'une des revendications 4 à 6, caractérisé en ce que les canalisations d'eau sous pression (21) sont agencées sous la forme de canaux qui s'étendent directement dans la plaque (2) de répartition du gaz.

9. Dispositif selon l'une des revendications 1 à 8, caractérisé en ce que les ouvertures (10) de sortie du gaz sont disposées selon des rangées parallèles, entre lesquelles les buses de pulvérisation sont disposées selon des rangées respectives.

10. Dispositif selon l'une des revendications 1 à 9, caractérisé en ce que les cônes d'eau de pulvérisation (12) de buses de pulvérisation directement voisines traversent en des sens opposés les espaces (6) de répartition du gaz.
